# DEMANDE DE BREVET EUROPEEN

(11) **EP 1 150 010 A1**
(43) Date de publication de la demande: **31.10.2001**
(21) Numéro de dépôt: 00870090.8
(22) Date de dépôt: 28.04.2000
(51) Int. Cl.: F03D 11/04

(54) **Structure de support d'éolienne**

(71) Demandeur: La Construction Soudee en abrégé CS, 1180 Uccle (BE)
(72) Inventeur: Samyn, Philippe M., 1180 Bruxelles (BE)
(74) Mandataire: Gevers, François

(57) **Abrégé**

Une structure de support d'éolienne comprend un mât (10) présentant un axe central (24) et une longueur L. La structure comprend en outre une série d'au moins trois organes de renfort, chaque organe de renfort étant relié au mât, à une première hauteur prédéterminée h1, et à un point d'ancrage. Chaque organe de renfort comprend : i) un premier élément de renfort (12) s'étendant essentiellement perpendiculairement par rapport à l'axe du mât, chaque premier élément de renfort étant fixé au mât à une deuxième hauteur prédéterminée h2, la deuxième hauteur prédéterminée étant inférieure à la première hauteur prédéterminée; ii) un deuxième élément de renfort (13) relié d'une part au mât, à ladite première hauteur prédéterminée, et d'autre part au premier élément de renfort (12) à un point d'intersection (27), le deuxième élément de renfort s'étendant selon un angle β, par rapport à l'axe central du mat, supérieur à 20°; et iii) un troisième élément de renfort (14) relié d'une part au point d'intersection (27) et d'autre part au point d'ancrage de sorte à former un angle α entre le deuxième élément de renfort et le troisième élément de renfort face au mât inférieur à 180°. Au moins un des éléments de renfort de chaque organe de renfort est un élément de compression.

## Description

La présente invention est relative à une structure de support d'éolienne.

Dans l'état actuel de la technique, on distingue deux types de structure de support d'éolienne : les structures "autoportantes" et les structures haubanées.

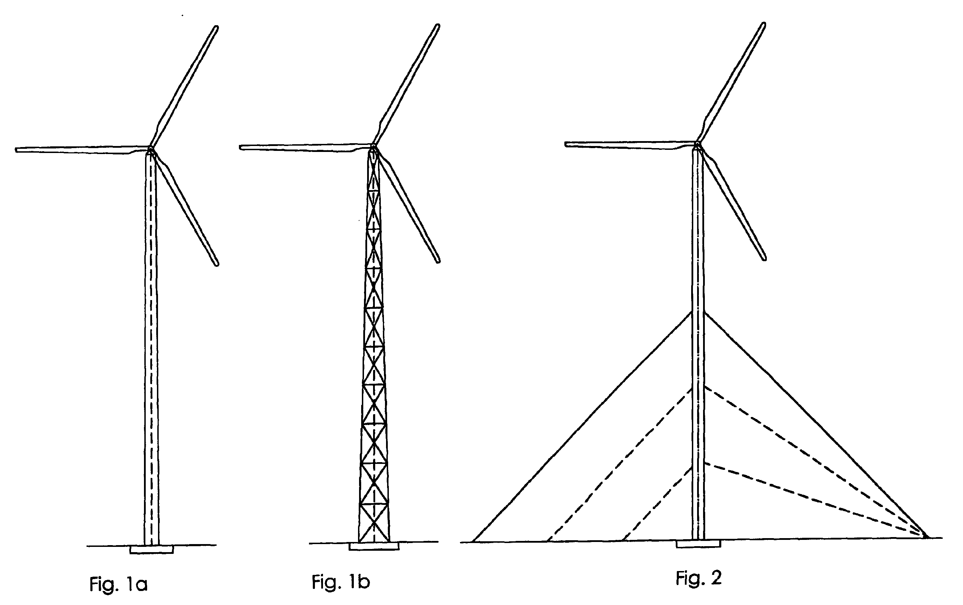

Une éolienne montée sur une structure "auto portante" est illustrée aux figures 1a et 1b. Le mât forme typiquement un corps creux prismatique en acier ou en béton (figure 1a) ou une structure en treillis (figure 1b) en acier ou autre matériau. Afin de pouvoir supporter le poids de l'éolienne et les efforts horizontaux qui s'y appliquent, qui peuvent s'élever jusqu'à respectivement 80 et 50 tonnes ou même plus, il faut construire un mât pouvant résister à de telles charges. Dans la pratique, le mât aura un poids considérable, ce qui entraîne directement ou indirectement d'autres inconvénients, à savoir : coût élevé de production, de transport, de fondation et de mise en place du mât, peu écologique pour le transport et d'un point de vue consommation des matériaux (ce qui va à l'encontre du but même de cette source d'énergie).

Afin de réduire le poids de la structure, des structures haubanées ont été développées. Un exemple d'une telle structure est illustrée à la figure 2. Un mât central (creux prismatique ou en treillis) est soutenu en place par une série de haubans, qui relient le mât au sol. Le cas échéant, des haubans supplémentaires (indiqués par des traits interrompus à la figure 2) s'étendent parallèlement au hauban principal (configuration en harpe), ou se rejoignent en un même point au sol (configuration en éventail). Ce type de structure offre l'avantage de réduire le poids par rapport à la structure autoportante. Par contre, une telle structure est relativement encombrante. En effet, les haubans s'étendent de préférence selon un angle de l'ordre de 45 degrés par rapport au mât. Dans ce cas, le point d'ancrage au sol est situé à une distance par rapport au mât qui est environ égale à la hauteur à laquelle les haubans sont fixés au mât. Par exemple, pour un mât ayant une longueur de 100 mètres et dont les haubans principaux sont fixés à une hauteur d'environ 60 mètres, on arriverait à une distance entre le point d'ancrage au sol et le mât de l'ordre de 60 mètres.

Le but de la présente invention est de prévoir une structure de support d'éolienne qui permet de pallier aux problèmes des deux types de support connus.

Ce but est atteint en prévoyant une structure de support d'éolienne suivant la revendication 1. En effet, chaque premier élément de renfort permet de faire diminuer l'encombrement au sol en prévoyant que l'angle formé par le troisième élément de renfort par rapport au deuxième élément de renfort face au mât soit inférieur à 180 degrés.

En prévoyant que la structure suivant l'invention est soutenue par un système d'organe de renfort, on permet de réduire considérablement le poids du mât par rapport aux structures autoportantes connues. En outre, les éléments de renfort sont plus courts que les haubans des structures haubanées connues, ce qui est favorable pour ce qui concerne les effets des charges auxiliaires telles que le vent et le poids propre des organes de renfort. La présence d'organes de renfort plus courts est également favorable pour la stabilité dynamique, car la fréquence de résonance de ces organes est plus élevée que ceux des structures haubanées classiquement. On a également pu constater, que le poids de la structure est du même ordre de grandeur que le poids des structures haubanés de façon classique. Dans certains cas, on a même pu constater que la structure suivant l'invention est au moins aussi légère, voire plus légère, que les structures haubanées classiquement.

La structure de support suivant l'invention apporte donc une solution aux problèmes cités, en proposant une structure combinant les avantages des deux types de structures connues, à savoir étant plus légère que les structures massives, en particulier aussi légère ou même plus légère que les structures haubanés classiquement, et étant moins encombrante que les systèmes haubanés.

Selon une forme de réalisation préférentielle, les éléments de renfort sont articulés entre eux. En particulier, on met en oeuvre des éléments qui ne soient soumis qu'à une traction ou compression (hors second ordre) afin d'alléger la structure au maximum.

Selon une forme de réalisation de la structure de support d'éolienne suivant l'invention, le point d'ancrage est situé au sol à une distance prédéterminée d1 du mât. Ceci permet de réaliser une structure de support, y compris les fondations, plus légère.

Selon une autre forme de réalisation de la structure de support d'éolienne suivant l'invention, le point d'ancrage est situé sur le mat à une troisième hauteur prédéterminée h3, la troisième hauteur prédéterminée étant inférieure à la deuxième hauteur prédéterminée. Ainsi, il ne faut prévoir que des fondations sous le mat. Cette disposition permet également de réduire l'encombrement de la structure au sol.

Pour augmenter sa rigidité, la structure comporte dans au moins une des zones délimitées par l'axe du mât, les deuxième et troisième éléments de renfort d'un des organes de renfort, ou dans un plan bisecteur entre deux zones, au moins un élément de renfort supplémentaire.

De préférence, on prévoit dans au moins une des zones, un seul élément de renfort supplémentaire reliant le point à hauteur h2 sur le mât au point d'ancrage 29, ou le point d'intersection 27 au pied du mât. On a pu constater qu'en prévoyant ainsi un seul élément de renfort supplémentaire qui relie le mât au troisième élément de renfort, on permet d'encore diminuer le poids de la structure tout en assurant que la structure soit suffisamment raide. En particulier, la structure comprend au moins un élément de connexion fixé au pied du mât et au point d'ancrage. Un tel élément de connexion permet de reprendre la composante horizontale des réactions de la structure à la hauteur du sol, ce qui permet de solliciter les fondations, prévues sous les troisièmes éléments de renfort, essentiellement verticalement au lieu d'en oblique. Par conséquent, des pieux en oblique ne sont à prévoir comme fondation que sous le mât central, ce qui facilite considérablement la construction et représente une économie substantielle de matière.

De préférence, le troisième élément de renfort s'étend essentiellement verticalement. Ceci permet d'éviter les effets néfastes dus au poids propre de l'élément de renfort. L'élément est également plus court, ce qui est favorable pour le poids total de la structure et la stabilité dynamique.

Afin de garantir un support adéquat du mât et afin que les éléments de renfort ne gênent pas le parcours des pales de l'éolienne, la première hauteur prédéterminée h1 est située entre les valeurs L/2 et L - lp (*L*/2 *≤h*1 <*L*-*lp*), lp étant égal à la longueur des pales de l'éolienne. Pour des raisons d'efficacité et donc de légèreté du système, la première hauteur prédéterminée est inférieure mais relativement proche de la valeur L - Ip.

L'angle β entre le deuxième élément et l'axe central du mât est de préférence entre 50 et 65°. On a pu constater que dans les différentes formes de réalisation selon l'invention, la valeur optimale de l'angle β est située dans cette plage. La valeur optimale est déterminée en fonction de l'équilibre à atteindre entre la stabilité, la raideur et le poids de la structure et dépend de la forme de réalisation choisie pour la structure.

D'autres caractéristiques et avantages de l'invention apparaîtront à la lecture de la description qui suit, faisant référence aux figures annexées.

Les figures 1a et 1b sont des vues de face d'éoliennes avec des structures de support autoportantes suivant l'état de la technique.

La figure 2 est une vue de face d'une éolienne avec une structure de support haubanée suivant l'état de la technique.

La figure 3 est une vue de face d'une éolienne avec sa structure suivant l'invention.

La figure 4 est une vue du haut de l'éolienne avec sa structure suivant la figure 3.

La figure 5 illustre schématiquement différentes formes de réalisation d'une partie de la structure de support suivant l'invention.

La figure 6 illustre schématiquement différentes formes de réalisation de mâts pouvant être utilisés dans la structure de support suivant l'invention.

La figure 7 illustre schématiquement deux alternatives de fondation pour la structure suivant l'invention (profonde ou superficielle, suivant la qualité du terrain).

La figure 8 illustre d'autres configurations d'organe de renfort.

La figure 9 est une vue en perspective d'une autre forme de réalisation de la structure suivant l'invention.

La figure 10 illustre une structure suivant l'invention équipée d'un local technique au pied du mât.

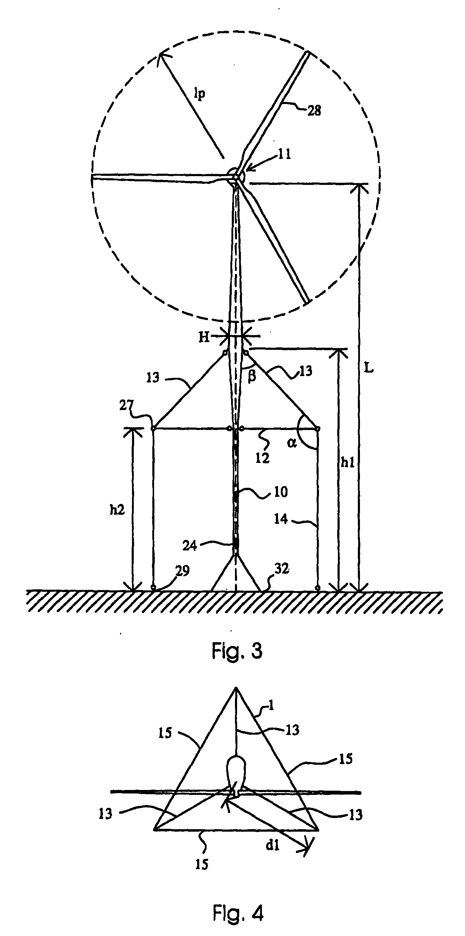

Faisant référence aux figures 3 et 4, la structure de support d'éolienne suivant l'invention comprend un mât 10 ayant une longueur L, une largeur maximale H (sans tenir compte de la largeur au sommet et à la base), et un axe central 24. En général, le mât a une longueur de l'ordre de 30 à 120 m et une largeur H de 1 à 5 m. En outre, la valeur L/H est généralement supérieure à 20 afin de limiter la prise au vent. L'ensemble 11 formé par la turbine d'éolienne et son support est monté au haut du mât et comporte des pales 12 ayant une longueur Ip. La structure de support suivant l'invention est conçue pour supporter un poids pouvant aller de 20 à 50 tonnes ou même plus. Le mât peut le cas échéant s'élargir localement en son sommet pour recevoir l'ensemble 11.

Etant donné que le mât 10 n'est pas autoportant, celui-ci est maintenu par un ensemble d'organes de renfort 12, 13, 14. Chaque organe de renfort comporte un premier élément de renfort 12, un deuxième élément de renfort 13 et un troisième élément de renfort 14. En particulier, le premier élément de renfort 12 est formé par un bras ou autre élément de compression. Les deuxième et troisième éléments de renfort peuvent être formés par un ou plusieurs câbles ou autres éléments de traction ou compression. En particulier, il est prévu trois organes de renfort, chaque organe étant espacé l'un de l'autre selon un angle de 120°, comme illustré à la figure 4. Les bras 12 sont chacun fixés au mât 10 à une hauteur prédéterminée h2. De préférence, les bras sont fixés de façon articulée au mât de façon à permettre une rotation selon un plan vertical. En effet, un noeud rigide consomme plus de matière puisqu'il transmet un moment fléchissant, et induit des moments fléchissants supplémentaires dans les bras et le mât central, ce qui contraint à les alourdir.

La présence du deuxième élément de renfort qui relie le mât au premier élément de renfort est avantageux. En effet, sans cela, le premier élément de renfort doit être relié de manière rigide au mât et est le siège d'un effort de flexion. Selon l'invention, il est préférable de mettre en oeuvre des éléments qui ne soient soumis qu'à une traction ou compression (hors effets de second ordre) afin d'alléger la structure au maximum.

Le deuxième élément 13 de renfort est relié d'une part au mât 10 et d'autre part au bras 12 à un point d'intersection 27. Le troisième élément de renfort 14 est relié au bras 12 et à un point d'ancrage 29. En particulier, ce sont les extrémités des éléments de renfort qui sont à chaque fois reliés.

Comme illustré à la figure 4, le point d'ancrage 29 est situé au sol à une distance prédéterminée d1 du mât. Selon une alternative, le point d'ancrage est situé sur le mât 10 à une hauteur prédéterminée h3, inférieure à la hauteur h2.

L'angle α formé par les deuxième et troisième éléments de renfort 13, 14 face au mât 10 est inférieur à 180°. On comprendra dès lors que la distance d1 dans une telle structure est inférieure à la distance correspondante dans une structure haubanée de façon classique. En général, l'angle α formé entre les éléments de renfort face au mât peut varier de (180° - 2β) à 179°.

Il est à noter que les premiers éléments de renfort 12 s'étendent essentiellement perpendiculairement par rapport à l'axe du mât. Une tolérance de l'ordre de +/- 30° par rapport à l'axe perpendiculaire est toutefois admissible.

On a également pu constater que, lorsque l'élément de renfort **14** est vertical, l'angle optimal β se situe entre environ 50 et 65 degrés. La hauteur h1 est idéalement légèrement inférieure à la valeur L - Ip. Par exemple, pour un mât ayant une longueur L de 100 mètres et des pales ayant une longueur de l'ordre de 35 mètres, la hauteur h1 est donc légèrement inférieure à 65 mètres et par exemple égale à 60 mètres.

La valeur d1 connaît également un optimum, mais sera déterminée en fonction de l'encombrement acceptable.

Pour assurer la stabilité transversale horizontale de l'ensemble des bras 12, ceux-ci sont reliés l'un à l'autre par des câbles ou autres éléments de renfort 15, comme illustré à la figure 4.

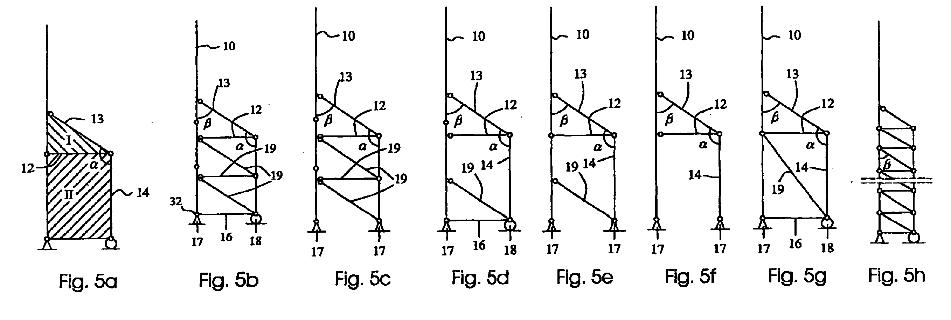

La configuration des organes de renfort illustrée aux figures 3 et 4 correspond à celle illustrée à la figure 5f. D'autres configurations sont possibles, comme le démontre les figures 5b à 5e et 5g et 5h. Les figures 5b à 5h illustrent uniquement un des organes de renfort, le cas échéant avec éléments de renfort supplémentaires et/ou élément de connexion. Il est clair que l'on peut prévoir ces configurations pour chacun des organes de renfort. Normalement, on utilise une même configuration pour toute la structure. Il est concevable toutefois de combiner différentes configuration sur une même structure.

Les formes de réalisation illustrées aux figures 5b, 5d, 5g et 5h comprennent toutes un élément de connexion 16, fixé au mât 10 et au troisième élément de renfort 14 à la hauteur du sol. Un tel élément de connexion permet d'éliminer la composante horizontale des réactions aux appuis 18 et permet ainsi de limiter l'emploi de pieux obliques comme fondation de l'appui 17. Les appuis 17 sont agencés à reprendre des efforts horizontaux et verticaux, tandis que les appuis 18 sont conçus à reprendre les efforts verticaux.

Dans certaines formes de réalisation (figures 5b à 5e, ainsi que 5g et 5h), on prévoit, dans la zone délimitée par le mât 10, le bras 12 et le troisième élément de renfort 14, N éléments de renfort supplémentaires 19, N étant égal à ou supérieur à 1. Les éléments de renfort supplémentaires sont en particulier reliés consécutivement l'un avec l'autre. Un des éléments supplémentaires 19 est relié au mât. Un des éléments de renfort supplémentaires 19, qui peut être le même élément que celui relié au mât (figures 5b-5e et 5g-5h) est relié au sol, de préférence du point d'ancrage 29. En général, on prévoit dans une des zones I et/ou II hachurées (fig. 5a) un ou plusieurs éléments de renfort.

Pour une valeur UH supérieure à 20, une configuration préférentielle est celle illustrée à la figure 5g (avec ou sans élément de connexion), car elle permet d'optimaliser la structure tant au point de vue poids que de rigidité.

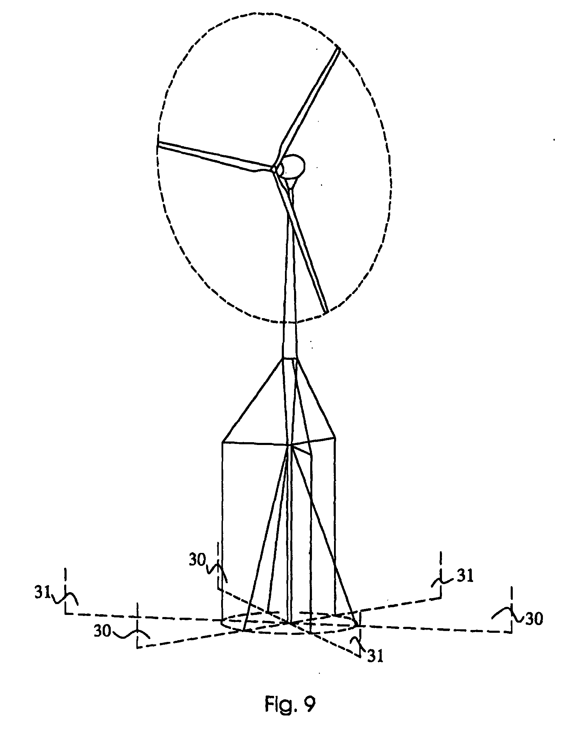

Au lieu de prévoir des éléments de renfort supplémentaires dans la zone précitée, on peut également prévoir des éléments de renfort supplémentaires dans un plan bisecteur 30 entre des plans 31 de deux zones, comme illustré à la figure 9.

La valeur optimale de l'angle β est à déterminer en fonction de la configuration sélectionnée. Pour la forme de réalisation suivant la figure 5g et pour h1/L = 3/5 et (h1-h2)/L ≅ 0,2, la valeur optimale de l'angle β est de l'ordre de 64°.

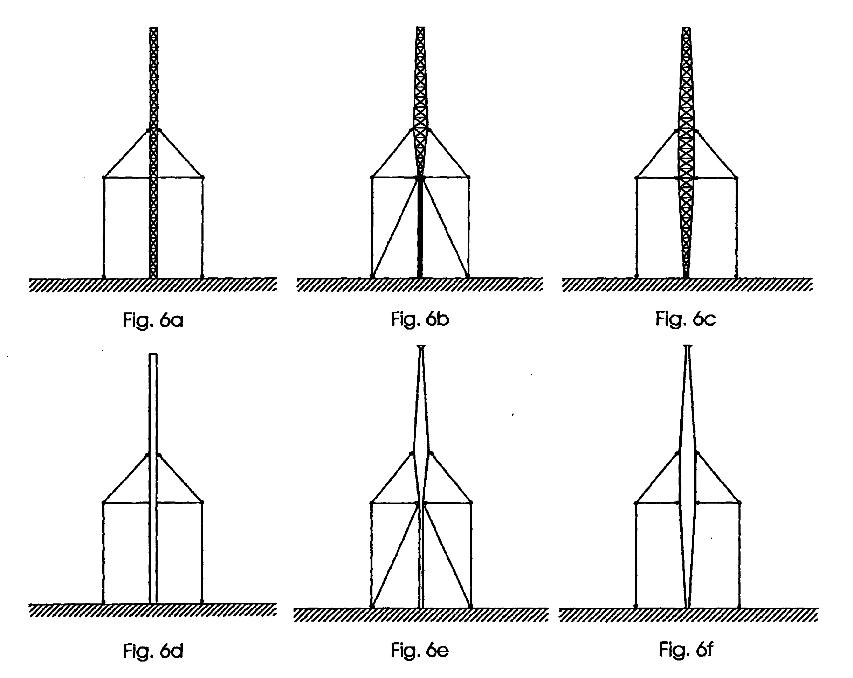

Pour ce qui concerne le mât 10, différentes configurations sont également concevables. En particulier, le mât peut être en treillis de largeur H constante (figure 6a), en treillis de section variable (figures 6b et 6c), un tube de diamètre H constant (figure 6d) ou un tube de section variable (figures 6e et 6f). Une combinaison dans laquelle une partie du mât est en tube et l'autre en treillis est également concevable. L'épaisseur des tubes peut également être variable.

On a pu constater que pour une valeur L/H égale ou supérieure à 20, on obtient une structure au moins aussi légère, voire plus légère que la structure haubanée de façon classique. Par rapport à la structure autoportante, on parvient à réduire le poids de l'ordre de 50 %.

Il est bien entendu que l'invention n'est pas limitée aux formes de réalisation décrites ci-dessus, mais que de nombreuses variantes peuvent être envisagées sans sortir du cadre de la présente invention.

Les éléments de compression peuvent être constitués de barres ayant une section constante pleine ou creuse. D'autres configurations sont également concevables, telles que : barre de section variable, treillis de section constante triangulaire ou carrée, treillis de section variable triangulaire ou carrée, barre haubanée en plusieurs tronçons, barres en faisceaux, etc.

De même, les éléments de traction peuvent être constitués par des câbles, des chaînes, des barres articulées, .... Par le terme élément, on entend un câble, une chaîne, une barre articulée ou autre moyen de traction similaire, mais également une partie de câble, chaîne, barre articulée ou autre moyen. En d'autres mots, les éléments de renfort 13, 14 peuvent être formés par un ou plusieurs câbles.

Les éléments de connexion sont constitués par des éléments de compression et/ou de traction.

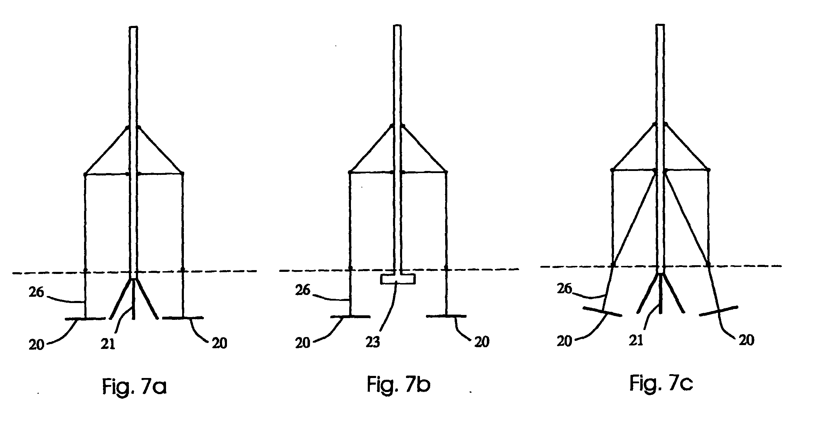

Les fondations de la structure peuvent également être réalisées de manières différentes. En dehors de configurations classiques comportant uniquement des pieux, les fondations pourraient être réalisées conformément aux figures 7a à 7c. Dans la forme de réalisation suivant la figure 7a, des plaques de béton 20 sont placées à une certaine profondeur en dessous des points d'ancrage des troisièmes éléments de traction, la profondeur étant déterminée en fonction de la longueur du mât et le type de sol. Pour un mât de 100 mètres de long, la profondeur pourrait par exemple être de 6 à 8 mètres. La dalle est placée sous un tirant 26. Elle peut être coulée sur place ou composée d'éléments préfabriqués solidarisés sur place. Elles peuvent dans ce dernier cas aisément être enlevables ultérieurement. Des pieux 21 sont prévus sous le mât.

Dans la forme de réalisation suivant la figure 7b, les pieux 21 sont remplacées par une plaque épaisse en béton 23.

La figure 7c est une forme de réalisation dans laquelle on prévoit des fondations en oblique pour reprendre les efforts horizontaux présents à chaque appui.

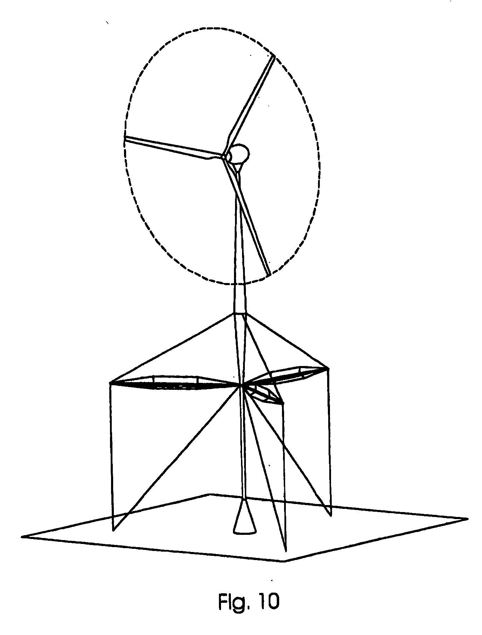

Un local technique 33 peut être prévu séparément ou au pied du mât, comme illustré à la figure 10.

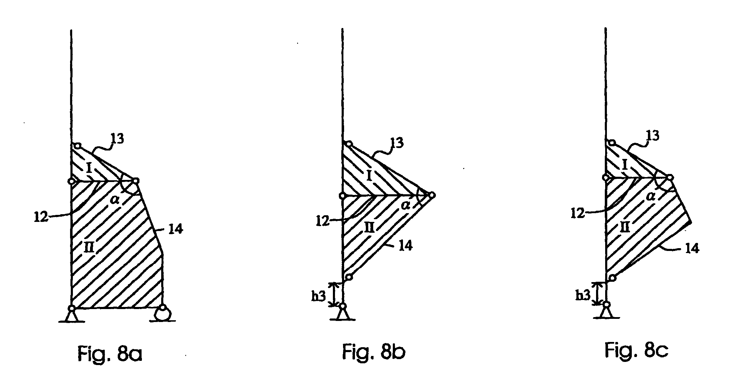

Les figures 8a à 8c sont des vues similaires à la figure 5a, illustrant différentes configurations pour les organes de renfort. Ainsi le troisième élément de renfort 14 ne doit pas nécessairement s'étendre selon un seul axe comme illustré aux figures 8a et 8c. En outre, le troisième élément de renfort peut être relié au mât (fig. 8b et 8c) au lieu d'au sol.

### REFERENCES DES FIGURES

- 10: mât
- 11: turbine et support d'éolienne
- 12: premier élément de renfort
- 13: deuxième élément de renfort
- 14: troisième élément de renfort
- 15: élément de renfort
- 16: élément de connexion
- 17, 18: appuis
- 19: élément de renfort supplémentaire
- 20: plaque en béton
- 21: pieux
- 23: plaque en béton
- 24: axe central du mât
- 26: tirant
- 27: point d'intersection
- 29: point d'ancrage
- 30: plan bisecteur
- 31: plan de zone
- 32: pied du mât
- 33: local technique

## Revendications

1. Structure de support d'éolienne comprenant :
un mât (10) présentant un axe central (24) et une longueur L ;
une série d'au moins trois organes de renfort, chaque organe de renfort
étant relié au mât, à une première hauteur prédéterminée h1, et à un point d'ancrage;
**caractérisée en ce que** :
a) chaque organe de renfort comprend :
i) un premier élément de renfort (12) s'étendant essentiellement perpendiculairement par rapport à l'axe du mât, chaque premier élément de renfort étant fixé au mât à une deuxième hauteur prédéterminée h2, la deuxième hauteur prédéterminée étant inférieure à la première hauteur prédéterminée;
ii) un deuxième élément de renfort (13) relié d'une part au mât, à ladite première hauteur prédéterminée, et d'autre part au premier élément de renfort (12) à un point d'intersection (27), le deuxième élément de renfort s'étendant selon un angle β, par rapport à l'axe central du mat, supérieur à 20°; et
iii) un troisième élément de renfort (14) relié d'une part au point d'intersection (27) et d'autre part au point d'ancrage de sorte à former un angle α entre le deuxième élément de renfort et le troisième élément de renfort face au mât inférieur à 180°; et
b) au moins un des éléments de renfort de chaque organe de renfort est un élément de compression.

2. Structure de support d'éolienne suivant la revendication 1, dans laquelle les éléments de renfort sont articulés entre eux.

3. Structure de support d'éolienne suivant la revendication 1 ou 2, dans laquelle le point d'ancrage est situé au sol à une distance prédéterminée d1 du mât.

4. Structure de support d'éolienne suivant la revendication 1 ou 2, dans laquelle le point d'ancrage est situé sur le mat à une troisième hauteur prédéterminée h3, la troisième hauteur prédéterminée étant inférieure à la deuxième hauteur prédéterminée.

5. Structure de support d'éolienne suivant l'une des revendications précédentes, comportant dans au moins une des zones délimitées par l'axe du mât, les deuxième et troisième éléments de renfort d'un des organes de renfort, ou dans un plan bisecteur entre deux zones, au moins un élément de renfort supplémentaire.

6. Structure de support d'éolienne suivant la revendication précédente, comprenant au moins un élément de connexion fixé au pied du mât 32 et au point d'ancrage 29.

7. Structure de support d'éolienne suivant l'une des revendications précédentes, dans laquelle le troisième élément de renfort s'étend essentiellement verticalement.

8. Structure de support d'éolienne suivant l'une des revendications précédentes, dans laquelle la première hauteur prédéterminée h1 est située entre les valeurs L/2 et L - Ip (*H*/2 ≤*h*1*<H - lp*), Ip étant égal à la longueur des pales de l'éolienne.

9. Structure de support d'éolienne suivant l'une des revendications précédentes, dans laquelle l'angle β est situé entre 50 et 65°.
